(19) Europäisches Patentamt

European Patent Office

Office européen des brevets

(11) **EP 3 372 035 B1**

(12) **EUROPEAN PATENT SPECIFICATION**

(45) Date of publication and mention
of the grant of the patent:
**10.07.2019 Bulletin 2019/28**

(21) Application number: **15798222.4**

(22) Date of filing: **02.11.2015**

(51) Int Cl.:
***H04W 72/12*** *(2009.01)*     ***H04W 74/08*** *(2009.01)*

(86) International application number:
**PCT/IB2015/058475**

(87) International publication number:
**WO 2017/077360 (11.05.2017 Gazette 2017/19)**

(54) **ADVANCED LAA SCHEDULING FOR MULTI-POINT SUBSET TRANSMISSION IN SHARED CELLS**

ERWEITERTE LAA-PLANUNG FÜR MEHRPUNKT-SUBSET-ÜBERTRAGUNG IN GETEILTEN ZELLEN

PLANIFICATION D'ACCÈS ASSISTÉ PAR LICENCE (LAA) AVANCÉE POUR TRANSMISSION DE SOUS-ENSEMBLE MULTIPOINT DANS DES CELLULES PARTAGÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.09.2018 Bulletin 2018/37**

(60) Divisional application:
**19176963.7**

(73) Proprietor: **Telefonaktiebolaget LM Ericsson
(publ)
164 83 Stockholm (SE)**

(72) Inventors:
• **CIMPU, Virgil
Ottawa, Ontario K2G 6V2 (CA)**
• **PARSONS, Eric W.
Stittsville, Ontario K2S 1E2 (CA)**
• **RICHARDS, Christopher
Ottawa, Ontario K1S 1L5 (CA)**

(74) Representative: **Ericsson
Patent Development
Torshamnsgatan 21-23
164 80 Stockholm (SE)**

(56) References cited:
**US-A1- 2013 322 279      US-A1- 2015 173 056
US-A1- 2015 312 840**

• **ERICSSON: "On Support of Multiple DL Data
Transmission Starting Points", 3GPP DRAFT;
R1-156047, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE , vol. RAN
WG1, no. Malmo, Sweden; 20151005 - 20151009
4 October 2015 (2015-10-04), XP051039810,
Retrieved from the Internet:
URL:http://www.3gpp.org/ftp/Meetings_3GPP_
SYNC/RAN1/Docs/ [retrieved on 2015-10-04]**

**Description**

Technical Field

The present disclosure relates to Clear Channel Assessment (CCA) in a shared cell deployment of a heterogeneous cellular communications network.

Background

*License Assisted Access (LAA)*

The fast uptake of Third Generation Partnership Project (3GPP) Long Term Evolution (LTE) in different regions of the world shows both that demand for wireless broadband data is increasing and that LTE is an extremely successful platform to meet that demand. Existing and new spectrum licensed for exclusive use by International Mobile Telecommunication (IMT) technologies will remain fundamental for providing seamless coverage, achieving the highest spectral efficiency, and ensuring the highest reliability of cellular networks through careful planning and deployment of high-quality network equipment and devices.

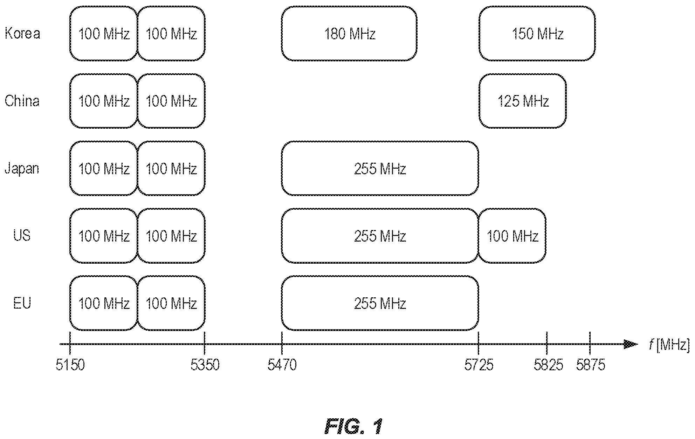

To meet ever increasing data traffic demand from users and, in particular, in concentrated high traffic buildings or hot spots, more mobile broadband bandwidth will be needed. Given the large amount of spectrum available in the unlicensed bands around the world as shown in Figure 1, unlicensed spectrum is more and more considered by cellular operators as a complementary tool to augment their service offerings. While unlicensed spectrum can never match the qualities of the licensed regime, solutions that allow an efficient use of unlicensed spectrum as a complement to licensed deployments have the potential to bring great value to the 3GPP operators and, ultimately, to the 3GPP industry as a whole. This type of solution would enable operators and vendors to leverage the existing or planned investments in LTE/ Evolved Packet Core (EPC) hardware in the radio and core network.

Regulatory information for operating in the unlicensed bands around the world (covering Europe, the United States (US), Canada, Mexico, Israel, Russia, South Africa, Turkey, China, Japan, Korea, India, Taiwan, Singapore, and Australia) was collected by 3GPP companies during 2014 and is now incorporated in 3GPP technical report for LAA Technical Report (TR) 36.889 V13.0.0 (2015-06). Most regulations put limits on transmission powers in the unlicensed bands. For instance, for the lower 5 Gigahertz (GHz) band, the maximum transmission power in Europe is 23 decibelmilliwatts (dBm) Equivalent Isotropically Radiated Power (EIRP). As a result of the transmission power limits, LAA Secondary Cells (SCells) will generally be more suited for small cell deployments. In the mid 5 GHz band, most countries require the equipment to detect whether radar systems are operating on the same channels in the region. This type of Dynamic Frequency Selection (DFS) rule requires the master equipment (a LAA enhanced or evolved Node B (eNB) or Wi-Fi Access Point (AP)) to detect the presence of certain radar signatures. If such a signature is detected, the equipment is required to cease operation in and vacate from the channel within seconds.

The unlicensed spectrum in general allows nonexclusive use. Given the widespread deployment and usage of other technologies in unlicensed spectrum for wireless communications in our society, it is envisioned that LTE would have to coexist with existing and future uses of unlicensed spectrum. Some regulatory regimes adopt a technology-neutral coexistence policy. For instance, the US Federal Communications Commission (FCC) Part 15.407 rule states "should harmful interference to licensed services in this band occur, they will be required to take corrective action." On the other hand, Japanese regulation explicitly requires Clear Channel Assessment (CCA) and a maximum channel occupancy time of 4 milliseconds (ms). In Europe, the European directive for Radio and Telecommunications Terminal Equipment (R&TTE directive) ERC/REC 70-03, dated August 22, 2011, requires "WAS/RLANs operating in the bands 5 250-5 350 MHz and 5 470-5 725 MHz shall use mitigation techniques that give at least the same protection as the detection, operational and response requirements described in EN 301 893 to ensure compatible operation with radio determination systems." The cited EN 301 893 defines conformance via three possible solutions: (1) IEEE 802.11 protocol, (2) generic load-based CCA protocol, or (3) frame-based CCA protocol.

3GPP is developing a single global set of standards for LAA with functionalities to meet regulatory requirements in different regions and bands. As there is a large available bandwidth of unlicensed spectrum, carrier selection is required for LAA nodes to select the carriers with low interference and that achieve good co-existence with other unlicensed spectrum deployments. For any technology, when deploying an additional node, the first rule for achieving high performance for the new node itself as well as for the existing nodes is to scan the available channels and select one that would receive least interference for the node itself and cause the least interference to existing nodes.

Prior art can be found, for example, in US 2015/0173056 A1, which generally relates to CSI feedback in LTE/LTE-Advanced systems with unlicensed spectrum, and in 3GPP TSG RAN WG1 Meeting #82bis, Malmo, Sweden, 5 - 9 October 2015, R1-156047, Ericsson, "On Support of Multiple DL Data Transmission Starting Points", Agenda Item 7.2.3.3.

*Shared Cells*

The constantly increasing demand for high data rates in cellular networks requires new approaches to meet this expectation. A challenging question for operators is how to evolve their existing cellular networks so as to meet the requirement for higher data rates. In this respect, a number of approaches are possible, namely: i) increase the density of existing macro base stations, ii) increase cooperation between macro base stations, or iii) deploy smaller base stations in areas where high data rates are needed within a macro base station grid.

The last option is referred in the related literature as a "heterogeneous network" or "heterogeneous deployment" and the layer consisting of smaller base stations is termed a "micro" or "pico" layer. The notion of shared cells (also sometimes referred to as "same," "merged," or "soft cell") is one possible instantiation of a heterogeneous network. In the shared cell heterogeneous network, a number of Reception/Transmission (R/T) points share the same cell Identifier (ID) as well as cell specific signals such that, from a User Equipment device (UE) perspective, these smaller "cells" are seen as one effective cell.

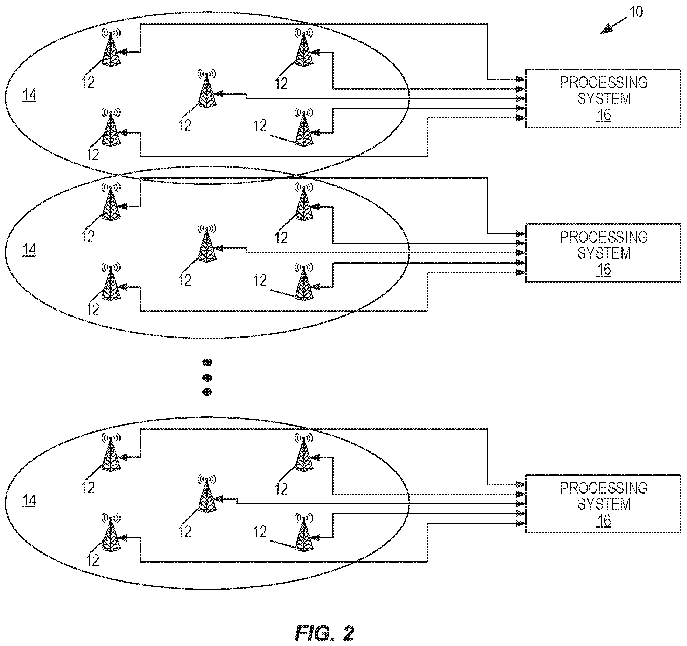

A simple instantiation of a shared cell instantiation, or deployment, of a heterogeneous network 10 is shown in Figure 2. As illustrated, several R/T points 12, each with their own coverage area, collectively serve a larger coverage area of a corresponding (shared) cell 14 that is identified with the cell ID. In Figure 2, there are N shared cells 14, each served by multiple R/T points 12 and having a corresponding centralized processing system 16. Typically, identical signals are transmitted at each R/T point 12 in a shared cell 14, though this is not required if there is sufficient Radio Frequency (RF) isolation between regions within the shared cell 14 and/or if the information is scheduled over the air so as to avoid a UE receiving conflicting, non-resolvable information.

The shared cell approach avoids the proliferation of cell IDs. Shared cells also avoid the high signaling load that would occur if each R/T point was a stand-alone cell and required hand-off operations as UEs move through the general coverage area. However, a UE connected to the shared cell cannot distinguish between the different R/T points.

In a shared cell deployment of a heterogeneous network, the location of a UE in a shared cell cannot be resolved to a particular R/T point because, e.g., signals transmitted by the UE are combined before processing. In other words, after combining the signals received by the various R/T points, the processing system for the shared cell is unable to determine which R/T point actually received the signal or received the strongest signal from the UE. As such, the location of the UE cannot be resolved to a particular R/T point.

Since the UE location cannot be resolved to a particular R/T point in a typical shared cell deployment, applying the shared cell configuration to an LAA deployment has the drawback of requiring simultaneous positive CCAs in all of the R/T points inside the cell. Due to the larger coverage area of the multiple R/T points, there is an increased probability of eNB LAA transmission collision with WiFi transmissions.

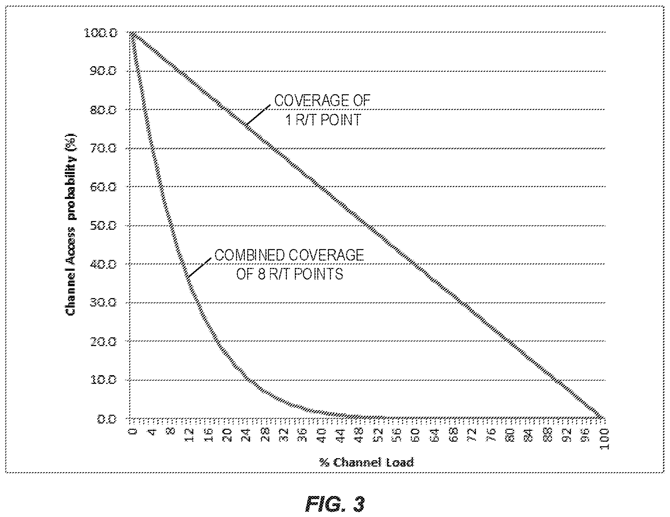

Figure 3 graphically illustrates the probability of successful CCA in a shared cell. Figure 3 shows how the probability of obtaining a successful CCA depends heavily on the coverage area of the combined R/T points for a given channel load, i.e. the collision or CCA domain. With eight times the coverage area (COMBINED COVERAGE OF 8 R/T POINTS line), the probability drops exponentially so that even at a channel load of -25%, the probability of obtaining CCA for the entire area served by 8 R/T points is 10% compared to 75% for a single R/T point (COVERAGE OF 1 R/T POINT line).

In light of the discussion above, there is a need for systems and methods for implementing LAA, particularly with respect to a shared cell deployment.

<u>Summary</u>

Systems and methods are disclosed relating to implementing a shared cell configuration in a heterogeneous deployment of, e.g., a License Assisted Access (LAA) network. In some embodiments, a method of operation of a processing system to schedule downlink transmissions to wireless devices in a shared cell in an unlicensed frequency spectrum, the shared cell being served by multiple Reception/Transmission (R/T) points, comprises receiving independent Clear Channel Assessment (CCA) decisions from the R/T points serving the shared cell, each CCA decision from each R/T point being indicative of whether a CCA succeeded or failed at the R/T point. The method further comprises performing scheduling for one or more upcoming Transmit Time Intervals (TTIs) based on the CCA decisions received from the R/T points serving the shared cell. In this manner, the R/T points are independently enabled for transmission or muted, and the processing system is able to take the configuration of the R/T points into consideration when scheduling transmissions to wireless devices in the shared cell.

In some embodiments, for each TTI of the one or more upcoming TTIs, performing the scheduling comprises performing the scheduling based on forecasted probabilities of successful reception by wireless devices from the shared cell when only those R/T points for which the corresponding CCA decisions are indicative of a successful CCA are transmitting. Further, in some embodiments, for each wireless device of at least one of the plurality of wireless devices, the forecasted probability of successful reception by the wireless device from the shared cell is a function of, for each R/T point of the plurality of R/T points for which the corresponding CCA decision is indicative of a successful CCA, an individual forecasted probability of successful reception by the wireless device when the R/T point is transmitting.

Still further, in some embodiments, for each R/T point for which the corresponding CCA decision is indicative of a successful CCA, the individual forecasted probability of successful reception by the wireless device when the R/T point is transmitting is a function of at least one of: a number of previously successful transmissions to the wireless device when the R/T point is transmitting and a number of previously failed transmissions to the wireless device when the R/T is transmitting. In other embodiments, for each R/T point for which the corresponding CCA decision is indicative of a successful CCA, the individual forecasted probability of successful reception by the wireless device when the R/T point is transmitting is a function of a location of the wireless device relative to the R/T point.

In some embodiments, the method further comprises updating an ON/OFF status of each of the R/T points based on the CCA decisions such that an ON/OFF status of an R/T point is ON if a respective CCA decision is indicative of a CCA success and OFF if the respective CCA decision is indicative of a CCA failure. Performing scheduling for the one or more upcoming TTIs based on the CCA decisions received from the R/T points serving the shared cell comprises scheduling one or more wireless devices for downlink transmission in the shared cell for a TTI based on forecasted probabilities of successful reception by the one or more wireless devices from the shared cell in view of the ON/OFF statuses of the R/T points. For each wireless device of the one or more wireless devices, the forecasted probability of successful reception by the wireless device from the shared cell is a function of, for each R/T point having the ON status, an individual forecasted probability of successful reception by the wireless device when the R/T point is transmitting. Performing scheduling for the one or more upcoming TTIs based on the CCA decisions received from the R/T points serving the shared cell further comprises triggering downlink transmissions to the one or more wireless devices from the shared cell in the TTI; determining a success or failure of reception of the downlink transmission by each of the one or more wireless devices in the TTI; for each wireless device of the one or more wireless devices scheduled in the TTI, updating the individual forecasted probability of success reception by the wireless device for each of the R/T points having the ON status based on the success or failure of reception of the downlink transmission by the wireless device; and repeating the steps of scheduling, triggering, determining, and updating for one or more additional TTIs. Further, in some embodiments, the method further comprises periodically adjusting the individual forecasted probabilities.

In some embodiments, the method further comprises updating an ON/OFF status of each of the R/T points based on the CCA decisions such that an ON/OFF status of an R/T point is ON if a respective CCA decision is indicative of a CCA success and OFF if the respective CCA decision is indicative of a CCA failure. Performing scheduling for the one or more upcoming TTIs based on the CCA decisions received from the R/T points serving the shared cell comprises, for each wireless device of multiple wireless devices potentially scheduled in a TTI, updating an individual forecasted probability of successful reception by the wireless device for each of the R/T points having the ON status based on a location of the wireless device, wherein the individual forecasted probability of successful reception by the wireless device for a R/T point is a forecasted probability of successful reception by the wireless device when the R/T point is transmitting. Performing scheduling for the one or more upcoming TTIs based on the CCA decisions received from the R/T points serving the shared cell further comprises scheduling one or more of the wireless devices for downlink transmission in the shared cell for the TTI based on forecasted probabilities of successful reception by the one or more wireless devices from the shared cell in view of the ON/OFF statuses of the R/T points, wherein, for each wireless device of the one or more wireless devices, the forecasted probability of successful reception by the wireless device from the shared cell is a function of, for each R/T point of the plurality of R/T points having the ON status, the individual forecasted probability of successful reception by the wireless device when the R/T point is transmitting. Performing scheduling for the one or more upcoming TTIs based on the CCA decisions received from the R/T points serving the shared cell further comprises triggering downlink transmissions to the one or more wireless devices from the shared cell in the TTI and repeating the steps of updating, scheduling, and triggering for one or more additional TTIs.

In some embodiments, the method further comprises determining whether a same R/T point has failed CCA for a predetermined amount of time and, upon determining that the same R/T point has failed CCA for the predetermined amount of time, triggering channel reselection.

In some embodiments, the method further comprises receiving received signal strength measurements from the R/T points in the shared cell for multiple channels in the unlicensed frequency spectrum and performing channel selection for the shared cell based on the received signal strength measurements. Further, in some embodiments, performing channel selection comprises performing channel selection such that a channel selected for the shared cell is a channel having the weakest received signal strength measurements for all of the R/T points in the shared cell as a whole.

Embodiments of a processing system operable to schedule downlink transmissions to wireless devices in a shared cell in an unlicensed frequency band, the shared cell being served by a plurality of R/T points, are also disclosed.

Embodiments of a method of operation of an R/T point are also disclosed. In some embodiments, a method of operation of a R/T point of a shared cell in an unlicensed frequency spectrum, the R/T point being one of multiple R/T points serving the shared cell and the shared cell, comprises performing a CCA, the CCA being independent from CCAs performed by other R/T points of the multiple R/T points serving the shared cell. The method further comprises either transmitting a downlink signal for the shared cell or muting transmission from the R/T point according to a CCA decision that results from performing the CCA for the R/T point.

The method further comprises sending the CCA decision to a processing system for the shared cell.

Embodiments of an R/T point of a shared cell in an unlicensed frequency spectrum, the R/T point being one of multiple R/T points serving the shared cell, are also disclosed.

Those skilled in the art will appreciate the scope of the present disclosure and realize additional aspects thereof after reading the following detailed description of the embodiments in association with the accompanying drawing figures.

Brief Description of the Drawings

The accompanying drawing figures incorporated in and forming a part of this specification illustrate several aspects of the disclosure, and together with the description serve to explain the principles of the disclosure.

Figure 1 illustrates the large amount of spectrum available in unlicensed bands around the world;

Figure 2 illustrates one example of a shared cell instantiation, or deployment, of a heterogeneous network;

Figure 3 graphically illustrates the probability of successful Clear Channel Assessment (CCA) in a shared cell;

Figure 4 illustrates a License Assisted Access (LAA) network that includes a shared cell served by multiple Reception/Transmission (R/T) points in which the R/T points perform independent CCAs according to some embodiments of the present disclosure;

Figure 5 illustrates the operation of the R/T points and the processing system of the shared cell of Figure 4 according to some embodiments of the present disclosure;

Figure 6 is a flow chart that illustrates the operation of the processing system and, in particular, the baseband processing unit of the processing system to perform scheduling based on forecasted probabilities of successful reception, where the forecasted probabilities of successful reception are determined based on historical or statistical information, according to some embodiments of the present disclosure;

Figure 7 is a flow chart that illustrates the operation of the processing system and, in particular, the baseband processing unit of the processing system to perform scheduling based on forecasted probabilities of successful reception, where the forecasted probabilities of successful reception are determined based distances between User Equipment devices (UEs) and the R/T points that are transmitting, according to some embodiments of the present disclosure;

Figure 8 illustrates the operation of the processing system and the R/T points to perform a channel selection procedure by which the channel on which the R/T points are to operate is selected according to some embodiments of the present disclosure;

Figure 9 illustrates a process for triggering channel reselection according to some embodiments of the present disclosure;

Figures 10 and 11 illustrate embodiments of the processing system of the shared cell; and

Figures 12 and 13 illustrate embodiments of an R/T point.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

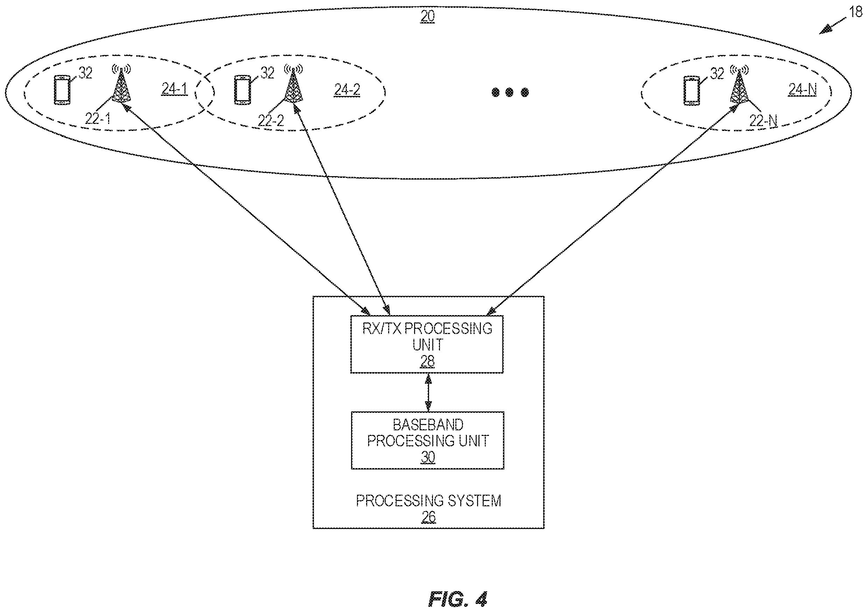

Systems and methods are disclosed for implementing a shared cell configuration in a heterogeneous deployment of a License Assisted Access (LAA) network. In this regard, Figure 4 illustrates a LAA network 18 that includes a shared cell 20 served by multiple Reception/Transmission (R/T) points 22-1 through 22-N (generally referred to herein collectively as R/T points 22 and individually as R/T point 22). The R/T points 22-1 through 22-N have corresponding coverage areas 24-1 through 24-N (generally referred to herein collectively as coverage areas 24 and individually as coverage area 24).

The shared cell 20 is controlled by a processing system 26. The processing system 26 includes a Receive/Transmit (RX/TX) processing unit 28 and a baseband processing unit 30. The RX/TX processing unit 28 includes hardware or a combination of hardware and software that operates to, e.g., combine signals received by the R/T points 22 to provide a combined receive signal for processing by the baseband processing unit 30 and send a transmit signal for the shared signal to each of the R/T points 22 for transmission. The baseband processing unit 30 includes hardware or a combination of hardware and software (e.g., one or more processors (e.g., one or more Central Processing Units (CPUs), Application Specific Integrated Circuits (ASICs), Field Programmable Gate Arrays (FPGAs), and/or the like) and memory or other non-transitory computer-readable medium storing software instructions that are executable by the at least one processor). The baseband processing unit 30 operates to process the combined receive signal from the RX/TX processing unit 28 and to send the transmit signal for the shared cell 20 to the RX/TX processing unit 28. The baseband processing unit 30 includes a scheduler (not shown) (i.e., provides a scheduling function) by which downlink and/or uplink transmissions in the shared cell 20 are scheduled.

In the typical LAA transmission, the radio will perform Clear Channel Assessment (CCA) to make sure that the channel is available before beginning the transmission. In the shared cell 20, the problem is complicated by the fact that there are several R/T points 22 and the probability of collisions is increased. As discussed below in detail, in order to lower the probability of collision, each R/T point 22 performs an individual (also referred to herein as independent) CCA for that particular R/T point 22 and makes an independent CCA decision (i.e., either CCA success or CCA failure) for that R/T point 22. Based on their respective CCA decisions, the R/T points 22 in the shared cell 20 individually, or independently, decide whether or not to transmit. Hence, only a subset of the R/T points 22 that have a successful CCA will transmit, while the other R/T points 22 are muted. In this manner, the collision domain is reduced from the full coverage area of the shared cell 20 to the coverage area of a single R/T point 22 and, as a result, the probability of obtaining a successful CCA for the shared cell 20 is increased.

The baseband processing unit 30, where the scheduler for the shared cell 20 resides, will receive feedback on the CCA decisions (also referred to herein as the ON/OFF states or statuses) of the R/T points 22 (i.e., transmitting (ON) or muted (OFF)). In some embodiments, the scheduler uses this information for an advanced scheduling scheme that takes into the account the CCA decisions of the individual R/T points 22. For example, in some embodiments, User Equipment devices (UEs) 32 are scheduled based on a forecasted probability of successful reception by the UEs 32 in view of the subset of the R/T points 22 that will be transmitting as determined by the independent CCA decisions of the R/T points 22. As an example, in Figure 4, if the R/T point 22-1 is transmitting and R/T point 22-2 is muted, the scheduler should schedule the UE 32-1, and the scheduler should not schedule UE 32-2.

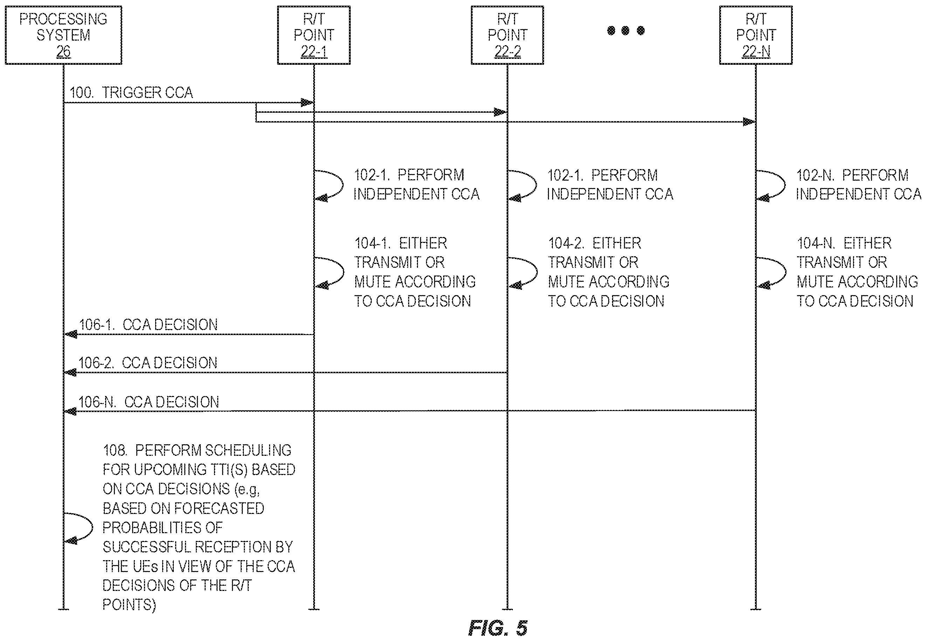

Figure 5 illustrates the operation of the R/T points 22 and the processing system 26 according to some embodiments of the present disclosure. As illustrated, in some embodiments, the processing system 26 triggers CCA by the R/T points 22-1 through 22-N (step 100). This triggering may be performed in any suitable manner. For instance, the triggering may be an implicit triggering of CCA by the R/T points 22-1 through 22-N by the processing system 26 sending a transmit signal to the R/T points 22-1 through 22-N for transmission for, e.g., a Transmit Time Interval (TTI). This may be a transmission of an initial signal or transmission of user data. As one particular example, a command may be sent to all R/T points 22-1 through 22-N to start performing CCA at the beginning of the next subframe. However, the triggering of the CCA by the R/T points 22-1 through 22-N is not limited thereto.

Upon the occurrence of the triggering event, the R/T points 22-1 through 22-N perform independent CCAs (steps 102-1 through 102-N). In other words, each R/T point 22 performs an independent CCA on an "observed" channel in an unlicensed frequency spectrum (e.g., the 5 Gigahertz (GHz) frequency spectrum). Here, the observed channel is a channel on which the R/T points 22 desire to transmit for the shared cell 20. The details of the CCAs performed by the R/T points 22-1 through 22-N may vary depending on the particular implementation. However, in general, the R/T points 22-1 through 22-N monitor an observed channel (i.e., the channel on which transmission is to be performed) for one or more consecutive observation periods to determine whether the observed channel is clear (i.e., not in use within the coverage area of the R/T point 22). Notably, in some embodiments, CCA uses a random back-off component to ensure that different users of the channel do not start transmitting at the same time. In this case, the R/T points 22-1 through 22-N use the same random back-off component, or number to ensure that some of the R/T points 22 would complete CCA before other R/T points 22, which in turn will block the other R/T points 22 (i.e., the other R/T points 22 will consider the channel as occupied as a result of the transmissions from the R/T points 22 that completed CCA earlier).

For each R/T point 22, the result of the CCA performed by the R/T point 22 is a CCA decision for the R/T point 22. The CCA decision is either a CCA success (i.e., the channel is clear and, as such, the R/T point 22 is permitted to transmit) or a CCA failure (i.e., the channel is not clear and, as such, the R/T point 22 is not permitted to transmit). The CCA decisions are thus indicative of ON/OFF statuses of the respective R/T points 22 (i.e., an R/T point 22 having a CCA success has an ON status in that the R/T point 22 is permitted to and does transmit, whereas an R/T point 22 having a CCA failure has an OFF status in that the R/T point 22 is not permitted to and does not transmit). The R/T points 22-1 through 22-N then either transmit or are muted (i.e., do not transmit) in accordance with their respective CCA decisions (steps 104-1 through 104-N). In this manner, only a subset of the R/T points 22 for which the respective CCAs resulted in CCA success decisions transmit, while the other R/T points 22 are muted.

In some embodiments, the R/T points 22-1 through 22-N report their respective CCA decisions to the processing system 26 (steps 106-1 through 106-N). The processing system 26 performs scheduling (i.e., downlink scheduling) for one or more upcoming TTIs based on the CCA decisions of the R/T points 22-1 through 22-N (step 108). In some embodiments, the processing system 26 performs downlink scheduling based on forecasted probabilities of successful reception by the UEs 32 in view of the CCA decisions (i.e., the ON/OFF statuses) of the R/T points 22. For example, the processing system 26 may perform downlink scheduling such that only those UEs 32 that are forecasted, or predicted, to be able to successfully receive downlink transmissions from the subset of "ON" R/T points 22 are scheduled.

As discussed below in detail, in some embodiments, the processing system 26 maintains, for each UE 32 and R/T point 22 combination, an individual forecasted probability of successful reception by that UE 32 when that R/T point 22 is transmitting based on historical information (e.g., indications of previous successful transmissions and/or previous failed transmissions for the UE 32 and R/T point 22 combination). Then, for each UE 32, the forecasted probability of successful reception by that UE 32 from the shared cell 20 when a particular subset of the R/T points 22 are transmitting is based on (e.g., a sum of) the individual forecasted probabilities of successful reception by the UE 32 when each individual R/T point 22 in the subset is transmitting.

In other embodiments, the processing system 26 utilizes positions, or locations, of the UEs 32 relative to the R/T points 22 in the subset of the R/T points 22 that are transmitting to determine forecasted probabilities of successful reception by the UEs 32. More specifically, in some embodiments, the processing system 26 determines, for each UE 32 and R/T point 22 combination, an individual forecasted probability of successful reception by that UE 32 when that R/T point 22 is transmitting based on a position, or location, of the UE 32 relative to the R/T point 22. Then, for each UE 32, the forecasted probability of successful reception by that UE 32 from the shared cell 20 when a particular subset of the R/T points 22 are transmitting is based on (e.g., a sum of) the individual forecasted probabilities of successful reception by the UE 32 when each individual R/T point 22 in the subset is transmitting.

As described above, in some embodiments, the processing system 26 performs scheduling based on forecasted probabilities of successful reception by the UEs 32 from the shared cell 20 given the subset of the R/T points 22 that are currently ON (i.e., given the subset of the R/T points 22 reporting CCA success). As further described above, in some embodiments, the forecasted probabilities of successful reception by the UEs 32 from the shared cell 20 are based on historical or statistical information maintained by the processing system 26. More specifically, in some embodiments, the processing system 26 monitors successful transmissions (e.g., Hybrid Automatic Repeat Request (HARQ) Acknowledgement (ACK)) and/or unsuccessful transmissions (e.g., HARQ Negative Acknowledgment (NACK) or no HARQ response) for each UE 32 and R/T point 22 combination, or pair. Using this information, the processing system 26 is able to determine (e.g., forecast or predict) which UEs 32 are most likely to successfully receive a downlink transmission from the shared cell 20 given the current subset of the R/T points 22 that are ON (i.e., enabled for transmission as a result of successful CCA decisions). For instance, relative values may be assigned to the UE 32 and R/T point 22 combinations based on the respective number of successful transmissions versus unsuccessful transmissions for that combination in the recent past (e.g., in the last few seconds).

In some particular embodiments, for each TTI or subframe, the processing system 26 (and in particular the baseband processing unit 30) receives information about the subset of R/T points 22 that is transmitting. The processing system 26 (and in particular the baseband processing unit 30) also knows the set of scheduled UEs 32 and the HARQ states of the UEs 32. The processing system 26 (and in particular the baseband processing unit 30) maintains, for each $UE_i$ and R/T point $RT_k$ combination, a forecasted probability of successful reception by $UE_i$ when the R/T point $RT_k$ is transmitting:

*forecast*($UE_i$, $RT_k$).

Assume that there are p R/T points 22 (i.e., k = 1, ..., p) in the shared cell 20 for a particular subframe and m scheduled UEs 32 (i.e., i = 1, ..., m), where both p and m are greater than or equal to 2 and, in practical implementations, potentially much greater than 2. In each TTI or subframe, the baseband processing unit 30 allocates a fixed amount of credit points *SC* that are to be distributed to all the UEs 32 that have successfully received data in that subframe. For example, if the $UE_i$ was scheduled and the R/T point $RT_k$ was transmitting during that subframe, then:

- If data was successfully received by $UE_i$, then:

$$forecast(UE_i, RT_k) \mathrel{+}= SC/m/p$$

- If a HARQ retransmission is required, then

$$forecast(UE_i, RT_k) \mathrel{-}= SC/m/p$$

A potential enhancement is to use the HARQ retransmission reason to assign different forecast credit values, with the highest credit value being assigned to the case where no ACK or NACK was received for the original transmission, which is a good indication that the UE has probably not received the transmission. After an initial ramp-up time, the individual forecasted probabilities of successful reception will start to predict which UEs 32 are most likely to receive data given a particular subset of R/T points 22 that are enabled to transmit. In particular, for $UE_i$, the forecasted probability

of successful reception by $UE_i$ from the shared cell 20 for a given subset of R/T points 22 that are ON is, at least in some embodiments:

$$\text{ProbabilityOfSuccessfulReception}\left(UE_i, \{RT_k\}_{k=1,\dots,p}\right) = \sum_{k=1}^{p} forecast(UE_i, RT_k)$$

Also, since the UEs 32 can move between the coverage of different R/T points 22, in some embodiments, the processing system 26 ages the individual forecasted probabilities of successful reception for the UE 32 and R/T point 22 combinations periodically (e.g., every few seconds) by, e.g., halving them.

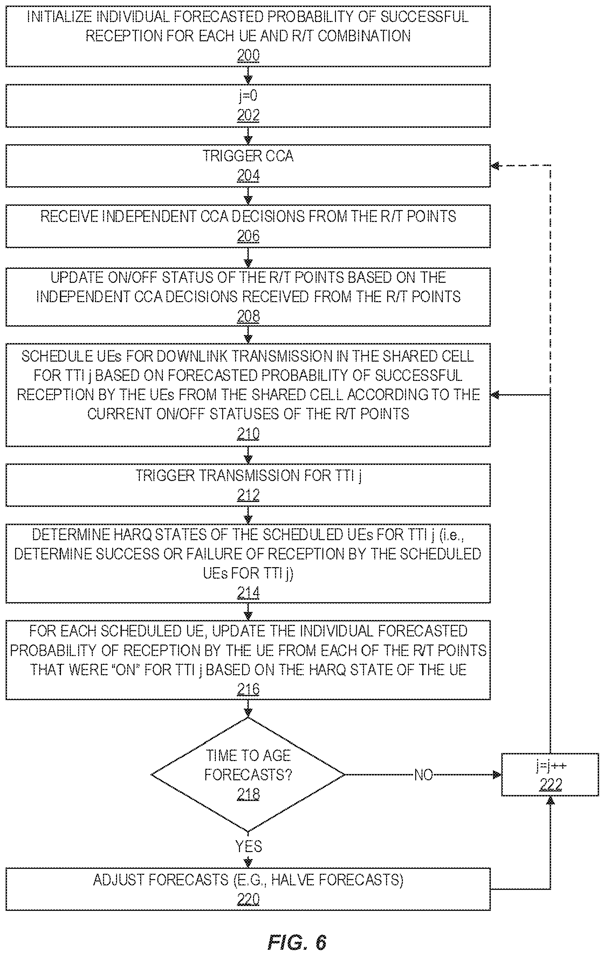

Figure 6 is a flow chart that illustrates the operation of the processing system 26 and, in particular, the baseband processing unit 30 of the processing system 26 to perform scheduling based on forecasted probabilities of successful reception, where the forecasted probabilities of successful reception are determined based on historical or statistical information, according to some embodiments of the present disclosure. As illustrated, the processing system 26 initializes individual forecasted probabilities of successful reception for each UE 32 and R/T point 22 combination (step 200). The individual forecasted probabilities of successful reception are initialized to some predefined value. For example, if the individual forecasted probabilities of successful reception can range from 0 to 100, then the individual forecasted probabilities of successful reception may be initialized to, e.g., 100 or some other suitable value for the particular implementation. In this example, a TTI or subframe counter j is set to zero (step 202).

As discussed above, the processing system 26 triggers CCA at each of the R/T points 22 (step 204) and, as a result, receives independent, or individual, CCA decisions from the R/T points 22 (step 206). In this example, the processing system 26 updates an ON/OFF status of each of the R/T points 22 based on the respective CCA decisions (step 208).

The processing system 26, and in particular the scheduler of the baseband processing unit 30, then schedules one or more UEs 32 for downlink transmission in the shared cell 20 in TTI *j* based on forecasted probabilities of successful reception of the UEs 32 in the shared cell 20 according to (e.g., given) the subset of the R/T points 22 having ON statuses (step 210). As discussed above, for each $UE_i$ of one or more UEs 32 potentially to be scheduled in TTI (or subframe) *j*, the processing system 26 computes:

$$\text{ProbabilityOfSuccessfulReception}\left(UE_i, \{RT_k\}_{k=1,\dots,p}\right) = \sum_{k=1}^{p} forecast(UE_i, RT_k)$$

for the given subset of the R/T points 22 having ON statuses (denoted here as $\{RT_k\}_{k=1,\dots,p}$). The processing system 26 then selects the UEs 32 having, e.g., the highest probabilities of successful reception from the shared cell 20 given the subset of R/T points 22 that are currently ON (or some subset of such UEs 32) to be scheduled for TTI *j*. As one example alternative, the processing system 26 may select the UEs 32 having probabilities of successful reception from the shared cell 20 that are greater than a predefined threshold (or some subset of such UEs) as the UEs 32 to be scheduled for TTI *j*.

The processing system 26 then triggers, or initiates, transmission to the scheduled UEs 32 in TTI *j* (step 212). The processing system 26 then determines, in this example, a HARQ state for each of the scheduled UEs (step 214). The HARQ state for a UE 32 may be, e.g., a state in which a HARQ ACK was received from the UE 32 for the transmission to the UE 32 in TTI *j* (i.e., a successful transmission) or a state in which either a HARQ NACK was received from the UE 32 or no HARQ response was received from the UE 32 for the transmission to the UE 32 in TTI *j* (i.e., a failed transmission).

The processing system 26 then updates the individual forecasted probabilities of successful reception for each UE 32 and R/T point 22 combination for the UEs 32 scheduled in TTI *j* and the R/T points 22 transmitting in TTI *j* (step 216). Thus, according to the embodiment described above, for each combination of $UE_i$ of the UEs 32 scheduled in TTI *j* and R/T point $RT_k$ of the R/T points 22 transmitting in TTI *j*, the processing system 26 updates the individual forecasted probability of successful reception by $UE_i$ when R/T point $RT_k$ is transmitting as:

• If data was successful received by $UE_i$, then:

$$forecast(UE_i, RT_k) \mathrel{+}= SC/m/p$$

• If a HARQ retransmission is required, then

$$forecast(UE_i, RT_k) \mathrel{-}= SC/m/p$$

where, as described above, SC is a predefined value, *m* is the number of scheduled UEs 32 for TTI *j*, and *p* is the number of R/T points 22 transmitting in TTI *j*.

Optionally, in some embodiments, the processing system 26 determines whether it is time to age the individual forecasted probabilities of successful reception for the different UE 32 and R/T point 22 combinations (step 218). Aging may be performed periodically (e.g., every few seconds). If so, the processing system 26 ages the individual forecasted probabilities of successful reception for the different UE 32 and R/T point 22 combinations by adjusting the values in some predefined manner (e.g., reducing the values by half) (step 220). Whether proceeding from step 218 or step 220, the processing system 26 then increments the TTI or subframe counter j (step 222) and then the process returns to step 210. Returning to step 210 assumes that CCA is not performed for every TTI or subframe. Alternatively, the process may return to step 204 such that CCA is repeated. CCA may be repeated as often as needed or desired given the particular CCA scheme or requirements.

In the embodiments described above with respect to Figure 6, the individual probabilities of successful reception for the different UE 32 and R/T point 22 combinations are determined based on historical or statistical information. However, in some other embodiments, the individual probabilities of successful reception for the different UE 32 and R/T point 22 combinations are determined based on the positions, or locations, of the UEs 32 with respect to known locations of the R/T points 22. In this regard, in some embodiments, the processing system 26 and, in particular the baseband processing unit 30, uses UE positioning information (also referred to herein as location information) and known positioning information for the R/T points 22 to determine which of the UEs 32 are within coverage (i.e., have the highest probability of successful reception) of the subset of R/T points 22 that are transmitting. The processing system 26 then gives higher scheduling priority to those UEs 32.

In one particular embodiment, the processing system 26 computes the distances between the UEs 32 and the R/T points 22 that are transmitting. In other words, for each UE 32 and R/T point 22 combination for those UEs 32 that are potentially to be scheduled and each R/T point 22 that is transmitting, the processing system 26 computes a distance between the UE 32 and the R/T point 22 for that UE 32 and R/T point 22 combination. In this case, the distance between a UE 32 and an R/T point 22 is also referred to as forecasted probability of successful reception by the UE 32 when the R/T point 22 is transmitting in that the likelihood that the UE 32 will successfully receive a transmission from the R/T point 22 increases as the distance between the UE 32 and the R/T point 22 decreases, and vice versa. In other words, here, the lower the value of the distance, the greater the probability of successful reception. Thus:

$$forecast(UE_i, RT_k) = 1/distance\ (UE_i, RT_k).$$

Then, for each of the UEs 32 to potentially be scheduled (i.e., for each $UE_i$ for i = 1,...,*m*, where *m* is the number of UEs 32 to potentially be scheduled for a TTI or subframe), the processing system 26 computes a forecasted probability of successful reception by the UE 32 given the current subset of R/T points 22 that are transmitting (according to their independent CCA decisions) as:

$$ProbabilityOfSuccessfulReception\left(\mathrm{UE}_i, \{RT_k\}_{k=1,...,p}\right)$$

$$= \mathrm{MAX}\left(forecast\left(\mathrm{UE}_i, \{RT_k\}_{k=1,...,p}\right)\right)\ and\ to\ simplify$$

$$= 1/MIN\left(distance\left(\mathrm{UE}_i, \{RT_k\}_{k=1,...,p}\right)\right)$$

where, again, *p* is the number of R/T points 22 transmitting in the TTI or subframe being scheduled.

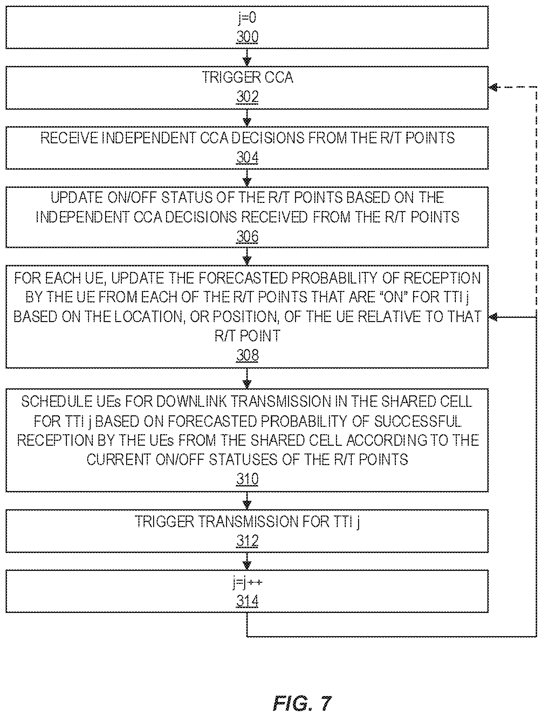

Figure 7 is a flow chart that illustrates the operation of the processing system 26 and, in particular, the baseband processing unit 30 of the processing system 26 to perform scheduling based on forecasted probabilities of successful reception, where the forecasted probabilities of successful reception are determined based on distances between the UEs 32 and the R/T points 22 that are transmitting, according to some embodiments of the present disclosure. As illustrated, in this example, a TTI or subframe counter *j* is set to zero (step 300). As discussed above, the processing system 26 triggers CCA at each of the R/T points 22 (step 302) and, as a result, receives independent, or individual, CCA decisions from the R/T points 22 (step 304). In this example, the processing system 26 updates an ON/OFF status of each of the R/T points 22 based on the respective CCA decision (step 306).

The processing system 26 then updates the individual forecasted probability of successful reception for each UE 32 and R/T point 22 combination for the UEs 32 to potentially be scheduled in TTI $j$ and the R/T points 22 transmitting in TTI $j$ based on the location, or position, of the UEs 32 relative to the known location, or position, of the R/T point 22 (step 308). Thus, according to the embodiment described above, for each combination of $UE_i$ of the UEs 32 to potentially be scheduled in TTI $j$ and R/T point $RT_k$ of the R/T points 22 transmitting in TTI $j$, the processing system 26 updates the individual forecasted probability of successful reception by $UE_i$ when R/T point $RT_k$ is transmitting as:

$$forecast(UE_i,\ RT_k) = 1/distance(UE_i,\ RT_k).$$

The processing system 26, and in particular the scheduler of the baseband processing unit 30, then schedules one or more UEs 32 for downlink transmission in the shared cell 20 in TTI $j$ based on forecasted probabilities of successful reception by the UEs 32 in the shared cell 20 according to (e.g., given) the subset of the R/T points 22 having ON statuses (step 310). As discussed above, for each $UE_i$ of one or more UEs 32 potentially to be scheduled in TTI (or subframe) $j$, the processing system 26 computes:

$$\mathrm{ProbabilityOfSuccessfulReception}\left(\mathrm{UE}_i, \{RT_k\}_{k=1,\ldots,p}\right)$$

$$= \mathrm{MAX}\left(forecast\left(\mathrm{UE}_i, \{RT_k\}_{k=1,\ldots,p}\right)\right)\ and\ to\ simplify$$

$$= 1/MIN\left(distance\left(\mathrm{UE}_i, \{RT_k\}_{k=1,\ldots,p}\right)\right)$$

for the given subset of the R/T points 22 having ON statuses (denoted here as $\{RT_k\}_{k=1,\ldots,p}$). The processing system 26 then selects the UEs 32 having, e.g., the highest probabilities of successful reception from the shared cell 20 given the subset of R/T points 22 that are currently ON (or some subset of such UEs 32) to be scheduled for TTI $j$. Importantly, in the example above, the UEs 32 having the highest (or best) probability of successful reception from the shared cell 20 are those UEs for which the computed "ProbabilityOfSuccessfulReception" is the highest. As one example alternative, the processing system 26 may select the UEs 32 having probabilities of successful reception from the shared cell 20 that are better than a predefined threshold (or some subset of such UEs) as the UEs 32 to be scheduled for TTI $j$.

The processing system 26 then triggers, or initiates, transmission to the scheduled UEs 32 in TTI $j$ (step 312). The processing system 26 then increments the TTI or subframe counter j (step 314) and then the process returns to step 308. Returning to step 308 assumes that CCA is not performed for every TTI or subframe. Alternatively, the process may return to step 302 such that CCA is repeated. CCA may be repeated as often as needed or desired given the particular CCA scheme or requirements.

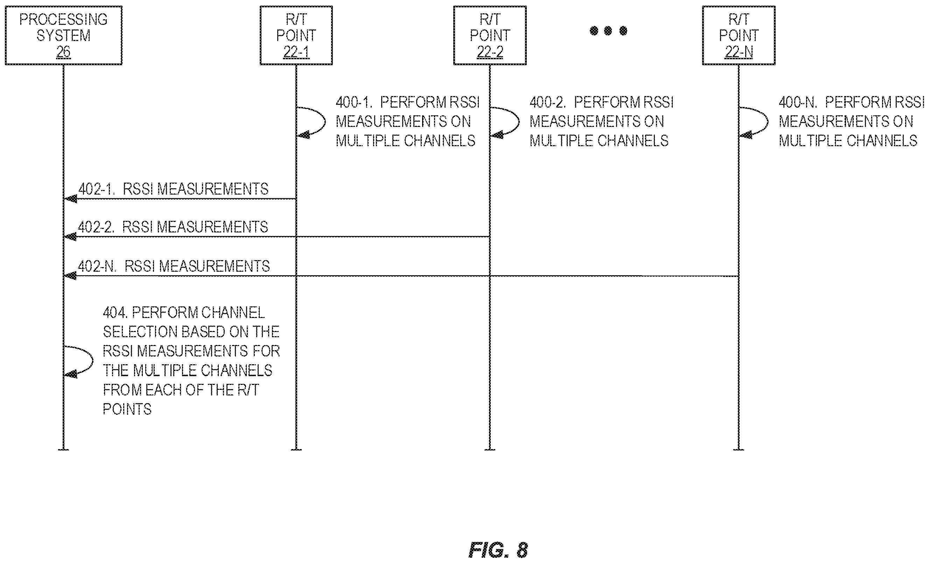

The embodiments described thus far relate to the independent CCAs performed by the R/T points 22 and the use of the resulting CCA decisions for scheduling for a particular channel. Figure 8 illustrates the operation of the processing system 26 and the R/T points 22 to perform a channel selection procedure by which the channel on which the R/T points 22 are to operate is selected according to some embodiments of the present disclosure. This channel selection procedure may be performed by the processing system 26 prior to the process of, e.g., Figures 5, 6, or 7.

As illustrated, the R/T points 22 each perform Received Signal Strength Indicator (RSSI) measurements on multiple channels in the unlicensed frequency spectrum (steps 400-1 through 400-N). Note that while RSSI is used here, other types of received signal strength measurements may be used. The R/T points 22 send the RSSI measurements for the multiple channels to the processing system 26 (steps 402-1 through 402-N). The processing system 26 then performs channel selection based on the RSSI measurements received from the R/T points 22 (step 404). More specifically, the processing system 26 selects the channel taking into consideration the RSSI measurements from all of the R/T points 22. In some embodiments, the processing system 26 selects the best channel for the R/T points 22 as a whole, which may not be the best channel for any particular R/T point 22. For example, the processing system 26 may select a channel that has an RSSI that is less than a predefined or configurable RSSI threshold for all of the R/T points 22.

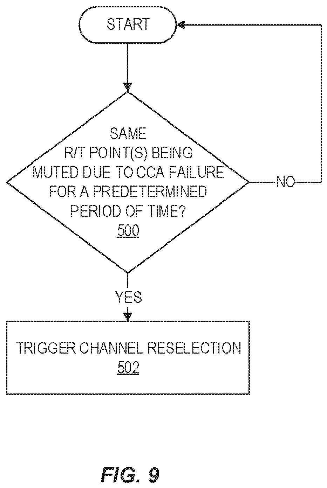

In some embodiments, the channel selection procedure of Figure 8 is performed only once. However, in other embodiments, the channel selection procedure of Figure 8 may be repeated as desired. In some particular embodiments, the channel selection procedure of Figure 8 is repeated when any R/T point(s) 22 are consecutively muted due to interference (i.e., CCA failure) for a predetermined period of time. In this regard, Figure 9 illustrates a process for triggering channel reselection according to some embodiments of the present disclosure. This process may be performed by, e.g., the processing system 26, but is not limited thereto. For instance, each R/T point 22 may alternatively perform the procedure of Figure 9. Note, however, that if an R/T point 22 triggers channel reselection, channel reselection is a system wide process (i.e., the R/T point 22 will not, but itself, perform channel reselection).

As illustrated in Figure 9, a decision is made as to whether the same R/T point(s) 22 has been muted (i.e., OFF status) due to CCA failure for a predetermined period of time (step 500). The predetermined period of time may, e.g., be defined by the network operator, statically defined (e.g., by a standard), or the like. If not, the process returns to step 500. Conversely, if the same R/T point(s) 22 has been muted for the predetermined amount of time, channel reselection is triggered (step 502). Upon triggering channel reselection, a channel selection procedure is performed (e.g., the procedure of Figure 8 is performed).

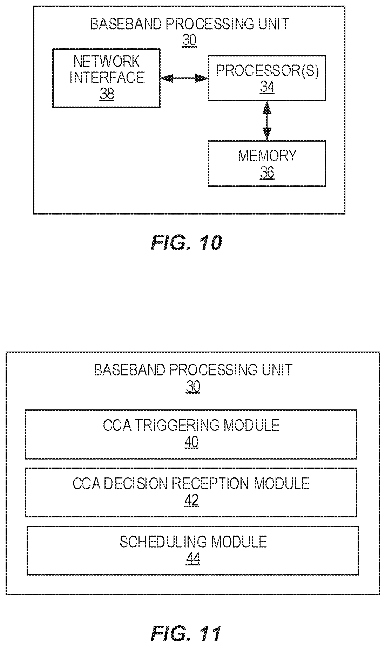

Figure 10 illustrates the baseband processing unit 30 of the processing system 26 according to some embodiments of the present disclosure. As illustrated, the baseband processing unit 30 includes one or more processors 34 (e.g., CPU(s), ASIC(s), FPGA(s), and/or the like), memory 36, and a network interface 38 (e.g., fiber optic or other wired or wireless interface to the RX/TX processing unit 28). In some embodiments, the functionality of the processing system 26, and in particular the functionality of the baseband processing unit 30, is implemented at least partially in software, which is stored in the memory 36 and executed by the processor(s) 34.

In some embodiments, a computer program including instructions which, when executed by at least one processor, causes the at least one processor to carry out the functionality of the processing system 26 and, in particular, the baseband processing unit 30 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 36).

Figure 11 is a block diagram of the baseband processing unit 30 according to some other embodiments of the present disclosure. As illustrated, the baseband processing unit 30 includes a CCA triggering module 40, a CCA decision reception module 42, and a scheduling module 44, each of which is implemented in software. The CCA triggering module 40 operates to trigger the independent CCAs at the R/T points 22. The CCA decision reception module 42 operates to receive (via an appropriate network/communication interface of the baseband processing unit 30, which is not shown) the CCA decisions from the R/T points 22. The scheduling module 44 performs scheduling for the shared cell 20 based on the CCA decisions received from the R/T points 22, as described above.

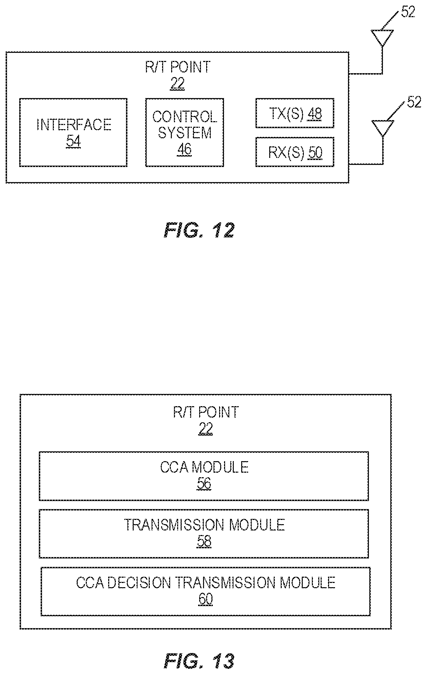

Figure 12 illustrates an R/T point 22 according to some embodiments of the present disclosure. As illustrated, the R/T point 22 includes a control system 46, which may include, for example, one or more processors (e.g., CPU(s), ASIC(s), FPGA(s), and/or the like) and memory. The R/T point 22 also includes one or more transmitters 48 and one or more receivers 50 connected to one or more antennas 52. The transmitter(s) 48 and the receiver(s) 50 include various hardware components such as, for example, filters, amplifiers, etc. The R/T point 22 also includes an interface 54 that communicatively couples the R/T point 22 to the processing system 26.

In some embodiments, a computer program including instructions which, when executed by at least one processor, causes the at least one processor to carry out at least some of the functionality of the R/T point 22 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 13 is a block diagram of the R/T point 22 according to some other embodiments of the present disclosure. As illustrated, the R/T point 22 includes a CCA module 56, a transmission module 58, and a CCA decision transmission module 60, each of which is implemented in software. The CCA module 56 operates to perform CCAs for the R/T point 22. The transmission module 58 operates to either enable the R/T point 22 for transmission or mute the R/T point 22 according to the CCA decision resulting from the CCA performed by the CCA module 56. The CCA decision transmission module 60 operates to transmit (via an associated interface of the R/T point 22, not shown) a CCA decision resulting from the CCA performed by the CCA module 56 to the processing system 26 of the shared cell 20, as described above.

The embodiments described herein provide a number of benefits and advantages over conventional systems. While not being limited to or by any particular benefit or advantage, some examples are as follows. Embodiments of the present disclosure allow an increased channel access probability in a shared cell configuration by performing independent CCA for each R/T point. Embodiments of the present disclosure allow better usage of the shared spectrum by scheduling only the UEs that have a high probability to be reached by the subset of the transmitting R/T points in a shared cell hence avoiding wasting Physical Resource Blocks (PRBs) on the UEs that have a low probability to receive the transmission and would trigger HARQ re-transmissions.

The following acronyms are used throughout this disclosure.

- 3GPP    Third Generation Partnership Project
- ACK     Acknowledgement
- AP      Access Point
- ASIC    Application Specific Integrated Circuit
- CCA     Clear Channel Assessment
- CPU     Central Processing Unit

- dBm     Decibel-Milliwatt
- DFS     Dynamic Frequency Selection
- EIRP     Equivalent Isotropically Radiated Power
- eNB     Enhanced or Evolved Node B
- EPC     Evolved Packet Core
- FCC     Federal Communications Commission
- FPGA     Field Programmable Gate Array
- GHz     Gigahertz
- HARQ     Hybrid Automatic Repeat Request
- ID     Identifier
- IMT     International Mobile Telecommunication
- LAA     License Assisted Access
- LTE     Long Term Evolution
- ms     Millisecond
- NACK     Negative Acknowledgement
- PRB     Physical Resource Block
- R&TTE     Radio and Telecommunications Terminal Equipment
- RF     Radio Frequency
- RSSI     Received Signal Strength Indicator
- R/T     Reception/Transmission
- RX/TX     Receive/Transmit
- SCell     Secondary Cell
- TR     Technical Report
- TTI     Transmit Time Interval
- UE     User Equipment
- US     United States

Those skilled in the art will recognize improvements and modifications to the embodiments of the present disclosure. All such improvements and modifications are considered within the scope of the concepts disclosed herein and the claims that follow.

**Claims**

1. A method of operation of a processing system (26) to schedule downlink transmissions to wireless devices (32) in a shared cell (20) in an unlicensed frequency spectrum, the shared cell (20) being served by a plurality of Reception/Transmission, R/T, points (22), comprising:

   receiving (106-1 through 106-N) independent Clear Channel Assessment, CCA, decisions from the plurality of R/T points (22) serving the shared cell (20), each CCA decision from each R/T point (22) being indicative of whether a CCA succeeded or failed at the R/T point (22); and
   performing (108) scheduling for one or more upcoming Transmit Time Intervals, TTIs, based on the CCA decisions received from the plurality of R/T points (22) serving the shared cell (20).

2. The method of claim 1 further comprising:

   updating (208) an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;
   wherein performing (108) scheduling for the one or more upcoming TTIs based on the CCA decisions received from the plurality of R/T points (22) serving the shared cell (20) comprises:

   scheduling (210) one or more wireless devices (32) for downlink transmission in the shared cell (20) for a TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, an individual forecasted probability of successful reception by the wireless device (32) when the R/T point (22) is transmitting;

triggering (212) downlink transmissions to the one or more wireless devices (32) from the shared cell (20) in the TTI;

determining (214) a success or failure of reception of the downlink transmission by each of the one or more wireless devices (32) in the TTI;

for each wireless device (32) of the one or more wireless devices (32) scheduled in the TTI, updating (216) the individual forecasted probability of successful reception by the wireless device (32) for each of the plurality of R/T points (22) having the ON status based on the success or failure of reception of the downlink transmission by the wireless device (32); and

repeating the steps of scheduling (210), triggering (212), determining (214), and updating (216) for one or more additional TTIs;

in particular wherein the method further comprises periodically adjusting the individual forecasted probabilities.

3. The method of claim 1 further comprising:

updating (306) an ON/OFF status of each of the plurality of R/T points (22) based on the CCA decisions such that an ON/OFF status of an R/T point (22) is ON if a respective CCA decision is indicative of a CCA success and OFF if the respective CCA decision is indicative of a CCA failure;

wherein performing (108) scheduling for the one or more upcoming TTIs based on the CCA decisions received from the plurality of R/T points (22) serving the shared cell (20) comprises:

for each wireless device (32) of a plurality of wireless devices (32) potentially scheduled in a TTI, updating (308) an individual forecasted probability of successful reception by the wireless device (32) for each of the plurality of R/T points (22) having the ON status based on a location of the wireless device (32), wherein the individual forecasted probability of successful reception by the wireless device (32) for a R/T point (22) is a forecasted probability of successful reception by the wireless device (32) when the R/T point (22) is transmitting;

scheduling (310) one or more wireless devices (32) of the plurality of wireless devices (32) for downlink transmission in the shared cell (20) for the TTI based on forecasted probabilities of successful reception by the one or more wireless devices (32) from the shared cell (20) in view of the ON/OFF statuses of the plurality of R/T points (22), wherein, for each wireless device (32) of the one or more wireless devices (32), the forecasted probability of successful reception by the wireless device (32) from the shared cell (20) is a function of, for each R/T point (22) of the plurality of R/T points (22) having the ON status, the individual forecasted probability of successful reception by the wireless device (32) when the R/T point (22) is transmitting;

triggering (312) downlink transmissions to the one or more wireless devices (32) from the shared cell (20) in the TTI; and

repeating the steps of updating (308), scheduling (310), and triggering (312) for one or more additional TTIs.

4. The method of claim 1 further comprising:

determining (500) whether a same R/T point (22) of the plurality of R/T points (22) has failed CCA for a predetermined amount of time; and

upon determining that the same R/T point (22) of the plurality of R/T points (22) has failed CCA for the predetermined amount of time, triggering (502) channel reselection.

5. The method of claim 1 further comprising:

receiving (402-1 through 402-N) received signal strength measurements from the plurality of R/T points (22) in the shared cell (20) for a plurality of channels in the unlicensed frequency spectrum; and

performing (404) channel selection for the shared cell (20) based on the received signal strength measurements, in particular

wherein performing (404) channel selection comprises performing (404) channel selection such that a channel selected for the shared cell (20) is a channel having weakest received signal strength measurements for all of the plurality of R/T points (22) in the shared cell (20) as a whole.

6. A processing system (26) operable to schedule downlink transmissions to wireless devices (32) in a shared cell (20) in an unlicensed frequency band, the shared cell (20) being served by a plurality of Reception/Transmission, R/T, points (22), comprising:

means for receiving independent Clear Channel Assessment, CCA, decisions from the plurality of R/T points (22) serving the shared cell (20), each CCA decision from each R/T point (22) being indicative of whether a CCA succeeded or failed at the R/T point (22); and

means for performing scheduling for one or more upcoming Transmit Time Intervals, TTIs, based on the CCA decisions received from the plurality of R/T points (22) serving the shared cell (20).

7. The processing system (26) of claim 6 wherein, for each TTI of the one or more upcoming TTIs, the scheduling is performed based on forecasted probabilities of successful reception by a plurality of wireless devices (32) from the shared cell (20) when only those R/T points (22) of the plurality of R/T points (20) for which the corresponding CCA decisions are indicative of a successful CCA are transmitting.

8. The processing system (26) of claim 7 wherein, for each wireless device (32) of at least one of the plurality of wireless devices (32), the forecasted probability of successful reception by the wireless device (32) from the shared cell (20) is a function of, for each R/T point (22) of the plurality of R/T points (22) for which the corresponding CCA decision is indicative of a successful CCA, an individual forecasted probability of successful reception by the wireless device (32) when the R/T point (22) is transmitting.

9. The processing system (26) of claim 8,
wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of at least one of: a number of previously successful transmissions to the wireless device (32) when the R/T point (22) is transmitting and a number of previously failed transmissions to the wireless device (32) when the R/T point (22) is transmitting; or
wherein, for each R/T point (22) of the plurality of R/T points (22) for which the corresponding CCA decision is indicative of a successful CCA, the individual forecasted probability of successful reception by the wireless device (32) when the R/T point (22) is transmitting is a function of a location of the wireless device (32) relative to the R/T point (22).

10. A computer program comprising instructions which, when executed on at least one processor (34), cause the at least one processor (34) to carry out the method according to any of claims 1-5.

11. A carrier containing the computer program of claim 10 wherein the carrier is one of an electronic signal, an optical signal, a radio signal, or a computer readable storage medium.

12. A method of operation of a Reception/Transmission, R/T, point (22) of a shared cell (20) in an unlicensed frequency spectrum, the R/T point (22) being one of a plurality of R/T points (22) serving the shared cell (20), comprising:

performing (102) a Clear Channel Assessment, CCA, the CCA being independent from CCAs performed by other R/T points (22) of the plurality of R/T points (22) serving the shared cell (20);
either transmitting a downlink signal for the shared cell (20) or muting transmission from the R/T point (22) (104) according to a CCA decision that results from performing the CCA for the R/T point (22); and
sending (106) the CCA decision to a processing system (26) for the shared cell (20).

13. A computer program comprising instructions which, when executed on at least one processor, cause the at least one processor to carry out the method according to claim 12.

14. A carrier containing the computer program of claim 13 wherein the carrier is one of an electronic signal, an optical signal, a radio signal, or a computer readable storage medium.

15. A Reception/Transmission, R/T, point (22) of a shared cell (20) in an unlicensed frequency spectrum, the R/T point (22) being one of a plurality of R/T points (22) serving the shared cell (20) and the shared cell (20), comprising:

means for performing a Clear Channel Assessment, CCA, the CCA being independent from CCAs performed by other R/T points (22) of the plurality of R/T points (22) serving the shared cell (20);
means for either transmitting a downlink signal for the shared cell (20) or muting transmission from the R/T point (22) (104) according to a CCA decision that results from performing the CCA for the R/T point (22); and means for sending (106) the CCA decision to a processing system (26) for the shared cell (20).

**Patentansprüche**

1. Verfahren zum Betreiben eines Verarbeitungssystems (26) zum Disponieren von Downlink-Übertragungen an drahtlose Vorrichtungen (32) in einer gemeinsamen Zelle (20) in einem unlizenzierten Frequenzspektrum, wobei die gemeinsame Zelle (20) von einer Mehrzahl von Empfangs-/Sende, R/T,-Punkten (22) versorgt wird, umfassend:

   Empfangen (106-1 bis 106-N) unabhängiger CCA (Beurteilung von Kanalfreiheit)-Entscheidungen von der Mehrzahl von R/T-Punkten (22), welche die gemeinsame Zelle (20) versorgen, wobei jede CCA-Entscheidung von jedem R/T-Punkt (22) anzeigt, ob eine CCA am R/T-Punkt (22) erfolgreich oder erfolglos war; und
   Durchführen (108) von Disponieren für ein oder mehrere bevorstehende Sendezeitintervalle, TTIs, basierend auf den CCA-Entscheidungen, die von der Mehrzahl von R/T-Punkten (22) empfangen werden, welche die gemeinsame Zelle (20) versorgen.

2. Verfahren nach Anspruch 1, ferner umfassend:

   Aktualisieren (208) eines EIN/AUS-Status eines jeden der Mehrzahl von R/T-Punkten (22) basierend auf den CCA-Entscheidungen, derart dass ein EIN/AUS-Status eines R/T-Punkts (22) EIN ist, wenn eine jeweilige CCA-Entscheidung einen CCA-Erfolg anzeigt, und AUS ist, wenn die jeweilige CCA-Entscheidung einen CCA-Misserfolg anzeigt;
   wobei das Durchführen (108) des Disponierens für das eine oder die mehreren bevorstehenden TTIs basierend auf den CCA-Entscheidungen, die von der Mehrzahl von R/T-Punkten (22) empfangen werden, welche die gemeinsame Zelle (20) versorgen, umfasst:

   Disponieren (210) einer oder mehrerer drahtloser Vorrichtungen (32) für Downlink-Übertragung in der gemeinsamen Zelle (20) für ein TTI basierend auf vorhergesagten Wahrscheinlichkeiten eines erfolgreichen Empfangs durch die eine oder die mehreren drahtlosen Vorrichtungen (32) von der gemeinsamen Zelle (20) in Anbetracht der EIN/AUS-Status der Mehrzahl von R/T-Punkten (22), wobei für jede drahtlose Vorrichtung (32) der einen oder der mehreren drahtlosen Vorrichtungen (32) die vorhergesagte Wahrscheinlichkeit eines erfolgreichen Empfangs durch die drahtlose Vorrichtung (32) von der gemeinsamen Zelle (20) für jeden R/T-Punkt (22) der Mehrzahl von R/T-Punkten (22) mit dem EIN-Status eine Funktion einer individuellen vorhergesagten Wahrscheinlichkeit eines erfolgreichen Empfangs durch die drahtlose Vorrichtung (32) ist, wenn der R/T-Punkt (22) sendet;
   Auslösen (212) von Downlink-Übertragungen an die eine oder die mehreren drahtlosen Vorrichtungen (32) von der gemeinsamen Zelle (20) im TTI;
   Bestimmen (214) eines Erfolgs oder Misserfolgs des Empfangs der Downlink-Übertragung durch jede der einen oder der mehreren drahtlosen Vorrichtungen (32) im TTI;
   Aktualisieren (216) für jede drahtlose Vorrichtung (32) der einen oder der mehreren im TTI disponierten drahtlosen Vorrichtungen (32) der individuellen vorhergesagten Wahrscheinlichkeit eines erfolgreichen Empfangs durch die drahtlose Vorrichtung (32) für jeden der Mehrzahl von R/T-Punkten (22) mit dem EIN-Status basierend auf dem Erfolg oder Misserfolg des Empfangs der Downlink-Übertragung durch die drahtlose Vorrichtung (32); und
   Wiederholen der Schritte des Disponierens (210), Auslösens (212), Bestimmens (214) und Aktualisierens (216) für ein oder mehrere zusätzliche TTIs;
   wobei das Verfahren ferner insbesondere umfasst:
   periodisches Anpassen der individuellen vorhergesagten Wahrscheinlichkeiten.

3. Verfahren nach Anspruch 1, ferner umfassend:

   Aktualisieren (306) eines EIN/AUS-Status eines jeden der Mehrzahl von R/T-Punkten (22) basierend auf den CCA-Entscheidungen, derart dass ein EIN/AUS-Status eines R/T-Punkts (22) EIN ist, wenn eine jeweilige CCA-Entscheidung einen CCA-Erfolg anzeigt, und AUS ist, wenn die jeweilige CCA-Entscheidung einen CCA-Misserfolg anzeigt;
   wobei das Durchführen (108) des Disponierens für das eine oder die mehreren bevorstehenden TTIs basierend auf den CCA-Entscheidungen, die von der Mehrzahl von R/T-Punkten (22) empfangen werden, welche die gemeinsame Zelle (20) versorgen, umfasst:

Aktualisieren (308) für jede drahtlose Vorrichtung (32) einer Mehrzahl von drahtlosen Vorrichtungen (32), die in einem TTI möglicherweise disponiert werden, einer individuellen vorhergesagten Wahrscheinlichkeit eines erfolgreichen Empfangs durch die drahtlose Vorrichtung (32) für jeden der Mehrzahl von R/T-Punkten (22) mit dem EIN-Status basierend auf einer Position der drahtlosen Vorrichtung (32), wobei die individuelle vorhergesagte Wahrscheinlichkeit eines erfolgreichen Empfangs durch die drahtlose Vorrichtung (32) für einen R/T-Punkt (22) eine vorhergesagte Wahrscheinlichkeit eines erfolgreichen Empfangs durch die drahtlose Vorrichtung (32) ist, wenn der R/T-Punkt (22) sendet;

Disponieren (310) einer oder mehrerer drahtloser Vorrichtungen (32) der Mehrzahl von drahtlosen Vorrichtungen (32) für Downlink-Übertragung in der gemeinsamen Zelle (20) für das TTI basierend auf vorhergesagten Wahrscheinlichkeiten eines erfolgreichen Empfangs durch die eine oder die mehreren drahtlosen Vorrichtungen (32) von der gemeinsamen Zelle (20) in Anbetracht der EIN/AUS-Status der Mehrzahl von R/T-Punkten (22), wobei für jede drahtlose Vorrichtung (32) der einen oder der mehreren drahtlosen Vorrichtungen (32) die vorhergesagte Wahrscheinlichkeit eines erfolgreichen Empfangs durch die drahtlose Vorrichtung (32) von der gemeinsamen Zelle (20) eine Funktion der individuellen vorhergesagten Wahrscheinlichkeit eines erfolgreichen Empfangs durch die drahtlose Vorrichtung (32) für jeden R/T-Punkt (22) der Mehrzahl von R/T-Punkten (22) mit dem EIN-Status ist, wenn der R/T-Punkt (22) sendet;

Auslösen (312) von Downlink-Übertragungen an die eine oder die mehreren drahtlosen Vorrichtungen (32) von der gemeinsamen Zelle (20) im TTI; und Wiederholen der Schritte des Aktualisierens (308), Disponierens (310) und Auslösens (312) für ein oder mehrere zusätzliche TTIs.

4. Verfahren nach Anspruch 1, ferner umfassend:

Bestimmen (500), ob ein gleicher R/T-Punkt (22) der Mehrzahl von R/T-Punkten (22) eine erfolglose CCA für eine vorbestimmte Zeitdauer aufweist; und

Auslösen (502) von Kanalneuauswahl bei Bestimmen, dass der gleiche R/T-Punkt (22) der Mehrzahl von R/T-Punkten (22) eine erfolglose CCA für die vorbestimmte Zeitdauer aufweist.

5. Verfahren nach Anspruch 1, ferner umfassend:

Empfangen (402-1 bis 402-N) von Empfangssignalstärkemessungen von der Mehrzahl von R/T-Punkten (22) in der gemeinsamen Zelle (20) für eine Mehrzahl von Kanälen im unlizenzierten Frequenzspektrum; und

Durchführen (404) von Kanalauswahl für die gemeinsame Zelle (20) basierend auf den Empfangssignalstärkemessungen, wobei

das Durchführen (404) von Kanalauswahl insbesondere ein derartiges Durchführen (404) von Kanalauswahl umfasst, dass ein für die gemeinsame Zelle (20) ausgewählter Kanal ein Kanal mit schwächsten Empfangssignalstärkemessungen für alle der Gesamtheit von R/T-Punkten (22) in der gemeinsamen Zelle (20) insgesamt ist.

6. Verarbeitungssystems (26), das zum Disponieren von Downlink-Übertragungen an drahtlose Vorrichtungen (32) in einer gemeinsamen Zelle (20) in einem unlizenzierten Frequenzband ausgelegt ist, wobei die gemeinsame Zelle (20) von einer Mehrzahl von Empfangs-/Sende, R/T,-Punkten (22) versorgt wird, umfassend:

Mittel zum Empfangen unabhängiger CCA (Beurteilung der Kanalfreiheit)-Entscheidungen von der Mehrzahl von R/T-Punkten (22), welche die gemeinsame Zelle (20) versorgen, wobei jede CCA-Entscheidung von jedem R/T-Punkt (22) anzeigt, ob eine CCA am R/T-Punkt (22) erfolgreich oder erfolglos war; und

Mittel zum Durchführen von Disponieren für ein oder mehrere bevorstehende Sendezeitintervalle, TTIs, basierend auf den CCA-Entscheidungen, die von der Mehrzahl von R/T-Punkten (22) empfangen werden, welche die gemeinsame Zelle (20) versorgen.

7. Verarbeitungssystem (26) nach Anspruch 6, wobei für jedes TTI des einen oder der mehreren bevorstehenden TTIs das Disponieren basierend auf vorhergesagten Wahrscheinlichkeiten eines erfolgreichen Empfangs durch eine Mehrzahl von drahtlosen Vorrichtungen (32) von der gemeinsamen Zelle (20) durchgeführt wird, wenn nur jene R/T-Punkte (22) der Mehrzahl von R/T-Punkten (22) senden, für welche die entsprechenden CCA-Entscheidungen eine erfolgreiche CCA anzeigen.

8. Verarbeitungssystem (26) nach Anspruch 7, wobei für jede drahtlose Vorrichtung (32) mindestens einer der Mehrzahl von drahtlosen Vorrichtungen (32) die vorhergesagte Wahrscheinlichkeit eines erfolgreichen Empfangs durch die drahtlose Vorrichtung (32) von der gemeinsamen Zelle (20) für jeden R/T-Punkt (22) der Mehrzahl von R/T-Punkten (22), für welchen die entsprechende CCA-Entscheidung eine erfolgreiche CCA anzeigt, eine Funktion einer individuellen vorhergesagten Wahrscheinlichkeit eines erfolgreichen Empfangs durch die drahtlose Vorrichtung (32) ist, wenn der R/T-Punkt (22) sendet.

9. Verarbeitungssystem (26) nach Anspruch 8,
wobei für jeden R/T-Punkt (22) der Mehrzahl von R/T-Punkten (22), für welchen die entsprechende CCA-Entscheidung eine erfolgreiche CCA anzeigt, die individuelle vorhergesagte Wahrscheinlichkeit eines erfolgreichen Empfangs durch die drahtlose Vorrichtung (32), wenn der R/T-Punkt (22) sendet, eine Funktion ist von mindestens einer von: einer Anzahl von zuvor gelungenen Übertragungen an die drahtlose Vorrichtung (32), wenn der R/T-Punkt (22) sendet, und einer Anzahl von zuvor misslungenen Übertragungen an die drahtlose Vorrichtung (32), wenn der R/T-Punkt (22) sendet; oder
wobei für jeden R/T-Punkt (22) der Mehrzahl von R/T-Punkten (22), für welchen die entsprechende CCA-Entscheidung eine erfolgreiche CCA anzeigt, die individuelle vorhergesagte Wahrscheinlichkeit eines erfolgreichen Empfangs durch die drahtlose Vorrichtung (32), wenn der R/T-Punkt (22) sendet, eine Funktion einer Position der drahtlosen Vorrichtung (32) in Bezug auf den R/T-Punkt (22) ist.

10. Computerprogramm, umfassend Anweisungen, die bei Ausführung auf mindestens einem Prozessor (34) den mindestens einen Prozessor (34) zum Durchführen des Verfahrens nach einem der Ansprüche 1 bis 5 veranlassen.

11. Datenträger, der das Computerprogramm nach Anspruch 10 enthält wobei der Datenträger eines von einem elektronischen Signal, einem optischen Signal, einem Funksignal oder einem computerlesbaren Speichermedium ist.

12. Verfahren zum Betreiben eines Empfangs-/Sende, R/T,-Punkts (22) einer gemeinsamen Zelle (20) in einem unlizenzierten Frequenzspektrum, wobei der R/T-Punkt (22) einer von einer Mehrzahl von R/T-Punkten (22) ist, welche die gemeinsame Zelle (20) versorgen, umfassend:

Durchführen (102) einer Beurteilung von Kanalfreiheit, CCA, wobei die CCA unabhängig von CCAs ist, die durch andere R/T-Punkte (22) der Mehrzahl von R/T-Punkten (22) durchgeführt werden, welche die gemeinsame Zelle (20) versorgen;
entweder Senden eines Downlink-Signals für die gemeinsame Zelle (20) oder Unterbinden von Übertragung vom R/T-Punkt (22) (104) gemäß einer CCA-Entscheidung, die aus dem Durchführen der CCA für den R/T-Punkt (22) resultiert; und
Senden (106) der CCA-Entscheidung an ein Verarbeitungssystem (26) der gemeinsamen Zelle (20).

13. Computerprogramm umfassend Anweisungen, die bei Ausführung auf mindestens einem Prozessor den mindestens einen Prozessor zum Durchführen des Verfahrens nach einem Anspruch 12 veranlassen.

14. Datenträger, der das Computerprogramm nach Anspruch 13 enthält wobei der Datenträger eines von einem elektronischen Signal, einem optischen Signal, einem Funksignal oder einem computerlesbaren Speichermedium ist.

15. Empfangs-/Sende, R/T,-Punkt (22) einer gemeinsamen Zelle (20) in einem unlizenzierten Frequenzspektrum, wobei der R/T-Punkt (22) einer von einer Mehrzahl von R/T-Punkten (22) ist, welche die gemeinsame Zelle (20) versorgen, umfassend:

Mittel zum Durchführen einer Beurteilung von Kanalfreiheit, CCA, wobei die CCA unabhängig von CCAs ist, die durch andere R/T-Punkte (22) der Mehrzahl von R/T-Punkten (22) durchgeführt werden, welche die gemeinsame Zelle (20) versorgen;
Mittel entweder zum Senden eines Downlink-Signals für die gemeinsame Zelle (20) oder zum Unterbinden von Übertragung vom R/T-Punkt (22) (104) gemäß einer CCA-Entscheidung, die aus dem Durchführen der CCA für den R/T-Punkt (22) resultiert; und
Mittel zum Senden (106) der CCA-Entscheidung an ein Verarbeitungssystem (26) der gemeinsamen Zelle (20).

**Revendications**

1. Procédé de fonctionnement d'un système de traitement (26) pour programmer des transmissions de liaison descendante à destination de dispositifs sans fil (32) dans une cellule partagée (20) dans un spectre de fréquences sans licence, la cellule partagée (20) étant desservie par une pluralité de points de réception/transmission, R/T, (22), comprenant :

la réception (106-1 à 106-N) de décisions d'évaluation de canal libre, CCA, indépendantes en provenance de la pluralité de points R/T (22) desservant la cellule partagée (20), chaque décision CCA provenant de chaque point R/T (22) indiquant la réussite ou l'échec d'une CCA au point R/T (22) ; et

l'exécution (108) d'une programmation pour un ou plusieurs intervalles de temps de transmission, TTI, à venir sur la base des décisions CCA reçues en provenance de la pluralité de points R/T (22) desservant la cellule partagée (20).

2. Procédé selon la revendication 1, comprenant en outre :

la mise à jour (208) d'un statut ON/OFF de chacun de la pluralité de points R/T (22) sur la base des décisions CCA de sorte qu'un statut ON/OFF d'un point R/T (22) soit ON si une décision CCA respective indique une réussite CCA et OFF si la décision CCA respective indique un échec CCA ;

dans lequel l'exécution (108) d'une programmation pour les un ou plusieurs TTI à venir sur la base des décisions CCA reçues en provenance de la pluralité de points R/T (22) desservant la cellule partagée (20) comprend :

la programmation (210) d'un ou plusieurs dispositifs sans fil (32) pour une transmission de liaison descendante dans la cellule partagée (20) pour un TTI sur la base de probabilités prévues d'une réception réussie par les un ou plusieurs dispositifs sans fil (32) en provenance de la cellule partagée (20) en tenant compte des statuts ON/OFF de la pluralité de points R/T (22), dans lequel, pour chaque dispositif sans fil (32) des un ou plusieurs dispositifs sans fil (32), la probabilité prévue d'une réception réussie par le dispositif sans fil (32) en provenance de la cellule partagée (20) est une fonction de, pour chaque point R/T (22) de la pluralité de points R/T (22) ayant le statut ON, une probabilité prévue individuelle d'une réception réussie par le dispositif sans fil (32) lorsque le point R/T (22) est en cours de transmission ;

le déclenchement (212) de transmissions de liaison descendante à destination des un ou plusieurs dispositifs sans fil (32) depuis la cellule partagée (20) dans le TTI ;

la détermination (214) d'une réussite ou d'un échec d'une réception de la transmission de liaison descendante par chacun des un ou plusieurs dispositifs sans fil (32) dans le TTI ;

pour chaque dispositif sans fil (32) des un ou plusieurs dispositifs sans fil (32) programmés dans le TTI, la mise à jour (216) de la probabilité prévue individuelle d'une réception réussie par le dispositif sans fil (32) pour chacun de la pluralité de points R/T (22) ayant le statut ON sur la base de la réussite ou de l'échec d'une réception de la transmission de liaison descendante par le dispositif sans fil (32) ; et

la répétition des étapes de la programmation (210), du déclenchement (212), de la détermination (214), et de la mise à jour (216) pour un ou plusieurs autres TTI ;

en particulier dans lequel le procédé comprend en outre :

l'ajustement périodique des probabilités prévues individuelles.

3. Procédé selon la revendication 1, comprenant en outre :

la mise à jour (306) d'un statut ON/OFF de chacun de la pluralité de points R/T (22) sur la base des décisions CCA de sorte qu'un statut ON/OFF d'un point R/T (22) soit ON si une décision CCA respective indique une réussite CCA et OFF si la décision CCA respective indique un échec CCA ;

dans lequel l'exécution (108) de la programmation pour les un ou plusieurs TTI à venir sur la base des décisions CCA reçues en provenance de la pluralité de points R/T (22) desservant la cellule partagée (20) comprend :

pour chaque dispositif sans fil (32) d'une pluralité de dispositifs sans fil (32) potentiellement programmés dans un TTI, la mise à jour (308) d'une probabilité prévue individuelle d'une réception réussie par le dispositif sans fil (32) pour chacun de la pluralité de points R/T (22) ayant le statut ON sur la base d'un emplacement du dispositif sans fil (32), dans lequel la probabilité prévue individuelle d'une réception réussie par le dispositif sans fil (32) pour un point R/T (22) est une probabilité prévue d'une réception réussie par le dispositif sans fil (32) lorsque le point R/T (22) est en cours de transmission ;

la programmation (310) d'un ou plusieurs dispositifs sans fil (32) de la pluralité de dispositifs sans fil (32) pour une transmission de liaison descendante dans la cellule partagée (20) pour le TTI sur la base de probabilités prévues d'une réception réussie par les un ou plusieurs dispositifs sans fil (32) en provenance de la cellule partagée (20) en tenant compte des statuts ON/OFF de la pluralité de points R/T (22), dans lequel, pour chaque dispositif sans fil (32) des un ou plusieurs dispositifs sans fil (32), la probabilité prévue d'une réception réussie par le dispositif sans fil (32) en provenance de la cellule partagée (20) est une fonction de, pour chaque point R/T (22) de la pluralité de points R/T (22) ayant le statut ON, la probabilité prévue individuelle d'une réception réussie par le dispositif sans fil (32) lorsque le point R/T (22) est en cours de transmission ;

le déclenchement (312) de transmissions de liaison descendante à destination des un ou plusieurs dispositifs sans fil (32) depuis la cellule partagée (20) dans le TTI ; et

la répétition des étapes de la mise à jour (308), de la programmation (310) et du déclenchement (312) pour un ou plusieurs autres TTI.

4. Procédé selon la revendication 1, comprenant en outre :

la détermination (500) si un même point R/T (22) de la pluralité de points R/T (22) a un échec CCA pendant une quantité de temps prédéterminée ; et

à la détermination que le même point R/T (22) de la pluralité de points R/T (22) a un échec CCA pendant la quantité de temps prédéterminée, le déclenchement (502) de la resélection de canal.

5. Procédé selon la revendication 1, comprenant en outre :

la réception (402-1 à 402-N) de mesures de force de signal reçu en provenance de la pluralité de points R/T (22) dans la cellule partagée (20) pour une pluralité de canaux dans le spectre de fréquences sans licence ; et

l'exécution (404) d'une sélection de canal pour la cellule partagée (20) sur la base des mesures de force de signal reçu, en particulier

dans lequel l'exécution (404) d'une sélection de canal comprend l'exécution (404) d'une sélection de canal de sorte qu'un canal sélectionné pour la cellule partagée (20) soit un canal ayant les plus faibles mesures de force de signal reçu pour l'intégralité de la pluralité de points R/T (22) dans la cellule partagée (20) dans son ensemble.

6. Système de traitement (26) utilisable pour programmer des transmissions de liaison descendante à destination de dispositifs sans fil (32) dans une cellule partagée (20) dans une bande de fréquences sans licence, la cellule partagée (20) étant desservie par une pluralité de points de réception/transmission, R/T, (22), comprenant :

des moyens pour la réception de décisions d'évaluation de canal libre, CCA, indépendantes en provenance de la pluralité de points R/T (22) desservant la cellule partagée (20), chaque décision CCA provenant de chaque point R/T (22) indiquant la réussite ou l'échec d'une CCA au point R/T (22) ; et

des moyens pour l'exécution d'une programmation pour un ou plusieurs intervalles de temps de transmission, TTI, à venir sur la base des décisions CCA reçues en provenance de la pluralité de points R/T (22) desservant la cellule partagée (20).

7. Système de traitement (26) selon la revendication 6, dans lequel, pour chaque TTI des un ou plusieurs TTI à venir, la programmation est effectuée sur la base de probabilités prévues d'une réception réussie par une pluralité de dispositifs sans fil (32) en provenance de la cellule partagée (20) lorsqu'uniquement les points R/T (22) de la pluralité de points R/T (22) pour lesquels les décisions CCA correspondantes indiquent une réussite CCA sont en cours de transmission.

8. Système de traitement (26) selon la revendication 7, dans lequel, pour chaque dispositif sans fil (32) d'au moins l'un de la pluralité de dispositifs sans fil (32), la probabilité prévue d'une réception réussie par le dispositif sans fil (32) en provenance de la cellule partagée (20) est une fonction de, pour chaque point R/T (22) de la pluralité de points R/T (22) pour lequel la décision CCA correspondante indique une réussite CCA, une probabilité prévue individuelle d'une réception réussie par le dispositif sans fil (32) lorsque le point R/T (22) est en cours de transmission.

9. Système de traitement (26) selon la revendication 8,
dans lequel, pour chaque point R/T (22) de la pluralité de points R/T (22) pour lequel la décision correspondante indique une réussite CCA, la probabilité prévue individuelle d'une réception réussie par le dispositif sans fil (32) lorsque le point R/T (22) est en cours de transmission est une fonction d'au moins l'un de : un nombre de réussites précédentes de transmissions à destination du dispositif sans fil (32) lorsque le point R/T (22) est en cours de transmission et un nombre d'échecs précédents de transmissions à destination du dispositif sans fil (32) lorsque le point R/T (22) est en cours de transmission ; ou
dans lequel, pour chaque point R/T (22) de la pluralité de points R/T (22) pour lequel la décision correspondante indique une réussite CCA, la probabilité prévue individuelle d'une réception réussie par le dispositif sans fil (32) lorsque le point R/T (22) est en cours de transmission est une fonction d'un emplacement du dispositif sans fil (32) par rapport au point R/T (22).

10. Programme informatique comprenant des instructions qui, lorsqu'elles sont exécutées sur au moins un processeur (34), amènent l'au moins un processeur (34) à effectuer le procédé selon l'une quelconque des revendications 1 à 5.

11. Porteuse contenant le programme informatique selon la revendication 10, dans laquelle la porteuse est l'un d'un signal électronique, d'un signal optique, d'un signal radio ou d'un support de mémorisation lisible par ordinateur.

12. Procédé de fonctionnement d'un point de réception/transmission, R/T, (22) d'une cellule partagée (20) dans un spectre de fréquences sans licence, le point R/T (22) étant l'un d'une pluralité de points R/T (22) desservant la cellule partagée (20), comprenant :

l'exécution (102) d'une évaluation de canal libre, CCA, la CCA étant indépendante de CCA effectuées par d'autres points R/T (22) de la pluralité de points R/T (22) desservant la cellule partagée (20) ;
soit la transmission d'un signal de liaison descendante pour la cellule partagée (20) soit l'interdiction de transmission depuis le point R/T (22) (104) en fonction d'une décision CCA découlant de l'exécution de la CCA pour le point R/T (22) ; et
l'envoi (106) de la décision CCA à un système de traitement (26) pour la cellule partagée (20).

13. Programme informatique comprenant des instructions qui, lorsqu'elles sont exécutées sur au moins un processeur, amènent l'au moins un processeur à effectuer le procédé selon la revendication 12.

14. Porteuse contenant le programme informatique selon la revendication 13, dans laquelle la porteuse est l'un d'un signal électronique, d'un signal optique, d'un signal radio ou d'un support de mémorisation lisible par ordinateur.

15. Point de réception/transmission, R/T, (22) d'une cellule partagée (20) dans un spectre de fréquences sans licence, le point R/T (22) étant l'un d'une pluralité de points R/T (22) desservant la cellule partagée (20), comprenant :

des moyens pour l'exécution d'une évaluation de canal libre, CCA, la CCA étant indépendante de CCA effectuées par d'autres points R/T (22) de la pluralité de points R/T (22) desservant la cellule partagée (20) ;
des moyens pour soit la transmission d'un signal de liaison descendante pour la cellule partagée (20) soit l'interdiction de transmission depuis le point R/T (22) (104) en fonction d'une décision CCA découlant de l'exécution de la CCA pour le point R/T (22) ; et
des moyens pour l'envoi (106) de la décision CCA à un système de traitement (26) pour la cellule partagée (20) .

*FIG. 1*

**FIG. 2**

EP 3 372 035 B1

*FIG. 3*

*FIG. 4*

```
┌──────────────┐      ┌─────────┐      ┌─────────┐               ┌─────────┐
│ PROCESSING   │      │  R/T    │      │  R/T    │    ● ● ●       │  R/T    │
│ SYSTEM       │      │  POINT  │      │  POINT  │               │  POINT  │
│ 26           │      │  22-1   │      │  22-2   │               │  22-N   │
└──────────────┘      └─────────┘      └─────────┘               └─────────┘
```

100. TRIGGER CCA

102-1. PERFORM INDEPENDENT CCA

102-1. PERFORM INDEPENDENT CCA

102-N. PERFORM INDEPENDENT CCA

104-1. EITHER TRANSMIT OR MUTE ACCORDING TO CCA DECISION

104-2. EITHER TRANSMIT OR MUTE ACCORDING TO CCA DECISION

104-N. EITHER TRANSMIT OR MUTE ACCORDING TO CCA DECISION

106-1. CCA DECISION

106-2. CCA DECISION

106-N. CCA DECISION

108. PERFORM SCHEDULING FOR UPCOMING TTI(S) BASED ON CCA DECISIONS (e.g, BASED ON FORECASTED PROBABILITIES OF SUCCESSFUL RECEPTION BY THE UEs IN VIEW OF THE CCA DECISIONS OF THE R/T POINTS)

*FIG. 5*

INITIALIZE INDIVIDUAL FORECASTED PROBABILITY OF SUCCESSFUL
RECEPTION FOR EACH UE AND R/T COMBINATION
200

↓

j=0
202

↓

TRIGGER CCA
204

↓

RECEIVE INDEPENDENT CCA DECISIONS FROM THE R/T POINTS
206

↓

UPDATE ON/OFF STATUS OF THE R/T POINTS BASED ON THE
INDEPENDENT CCA DECISIONS RECEIVED FROM THE R/T POINTS
208

↓

SCHEDULE UEs FOR DOWNLINK TRANSMISSION IN THE SHARED CELL
FOR TTI j BASED ON FORECASTED PROBABILITY OF SUCCESSFUL
RECEPTION BY THE UEs FROM THE SHARED CELL ACCORDING TO THE
CURRENT ON/OFF STATUSES OF THE R/T POINTS
210

↓

TRIGGER TRANSMISSION FOR TTI j
212

↓

DETERMINE HARQ STATES OF THE SCHEDULED UEs FOR TTI j (i.e.,
DETERMINE SUCCESS OR FAILURE OF RECEPTION BY THE SCHEDULED
UEs FOR TTI j)
214

↓

FOR EACH SCHEDULED UE, UPDATE THE INDIVIDUAL FORECASTED
PROBABILITY OF RECEPTION BY THE UE FROM EACH OF THE R/T POINTS
THAT WERE "ON" FOR TTI j BASED ON THE HARQ STATE OF THE UE
216

↓

TIME TO AGE
FORECASTS?
218

—NO→  j=j++
222

YES
↓

ADJUST FORECASTS (E.G., HALVE FORECASTS)
220

*FIG. 6*

j=0
300

↓

TRIGGER CCA
302

↓

RECEIVE INDEPENDENT CCA DECISIONS FROM THE R/T POINTS
304

↓

UPDATE ON/OFF STATUS OF THE R/T POINTS BASED ON THE
INDEPENDENT CCA DECISIONS RECEIVED FROM THE R/T POINTS
306

↓

FOR EACH UE, UPDATE THE FORECASTED PROBABILITY OF RECEPTION
BY THE UE FROM EACH OF THE R/T POINTS THAT ARE "ON" FOR TTI j
BASED ON THE LOCATION, OR POSITION, OF THE UE RELATIVE TO THAT
R/T POINT
308

↓

SCHEDULE UEs FOR DOWNLINK TRANSMISSION IN THE SHARED CELL
FOR TTI j BASED ON FORECASTED PROBABILITY OF SUCCESSFUL
RECEPTION BY THE UEs FROM THE SHARED CELL ACCORDING TO THE
CURRENT ON/OFF STATUSES OF THE R/T POINTS
310

↓

TRIGGER TRANSMISSION FOR TTI j
312

↓

j=j++
314

*FIG. 7*

27

**FIG. 8**

EP 3 372 035 B1

START

SAME
R/T POINT(S) BEING
MUTED DUE TO CCA FAILURE
FOR A PREDETERMINED
PERIOD OF TIME?
500

NO

YES

TRIGGER CHANNEL RESELECTION
502

*FIG. 9*

BASEBAND PROCESSING UNIT
30

NETWORK INTERFACE
38

PROCESSOR(S)
34

MEMORY
36

FIG. 10

BASEBAND PROCESSING UNIT
30

CCA TRIGGERING MODULE
40

CCA DECISION RECEPTION MODULE
42

SCHEDULING MODULE
44

FIG. 11

R/T POINT
22

INTERFACE
54

CONTROL
SYSTEM
46

TX(S) 48

RX(S) 50

52

52

FIG. 12

R/T POINT
22

CCA MODULE
56

TRANSMISSION MODULE
58

CCA DECISION TRANSMISSION MODULE
60

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150173056 A1

**Non-patent literature cited in the description**

- *3GPP technical report for LAA Technical Report (TR) 36.889 V13.0.0,* June 2015

- **ERICSSON.** On Support of Multiple DL Data Transmission Starting Points. *3GPP TSG RAN WG1 Meeting #82bis,* 05 October 2015